# EUROPEAN PATENT SPECIFICATION

(11) **EP 3 889 668 B1**
(45) Date of publication and mention of the grant of the patent: **01.05.2024**
(21) Application number: 20172356.6
(22) Date of filing: 30.04.2020
(51) Int. Cl.: G06V 10/141, G06V 40/19, G02B 27/00, G02B 27/01, G06F 3/01

(54) **HEAD MOUNTED DISPLAY**
KOPFMONTIERTE ANZEIGE
VISIOCASQUE

(30) Priority: 31.03.2020 US 202016835309
(43) Date of publication of application: 06.10.2021
(73) Proprietor: HTC Corporation, Taoyuan City 330 (TW)
(72) Inventor: SHIH, Bao-Jen, Taoyuan City 330 (TW); XIAO, Bo-Wen, Taoyuan City 330 (TW); FAN, Fu-Cheng, Taoyuan County 330 (TW)
(74) Representative: 2K Patentanwälte Blasberg Kewitz & Reichel

(56) References cited:
- WO-A1-2019/067731
- US-A1- 2015 035 744
- US-A1- 2019 012 540
- US-B1- 8 971 570

## Description

### TECHNICAL FIELD

The invention relates to a head mounted display, and more particularly, to a head mounted display that can improve eye-tracking accuracy.

### BACKGROUND

With the advancement of electronic technology, head mounted displays that can provide high-dimensional display capability have become a new trend. The head mounted display can provide a variety of visual experiences such as virtual reality, augmented reality and mixed reality, and has made revolutionary contributions to applications in various fields.

In the technical field of head mounted displays, tracking the state of the user's eyeballs is an important issue. In the conventional technical field, a light beam can be projected onto the eyeball through a light emitting diode, and an eyeball tracking operation can be performed through a light spot reflected on the eyeball.

Due to difference head shapes of users, when wearing the head mounted display, a distance between the user's eyeball and an imaging lens of the head mounted display may be different for different users. In such a case, when the user's eyeball is too close to an imaging lens of the head mounted display, the light beam projected by the light emitting diode for tracking the eyeball may only be effectively irradiated to a partial range of the eyeball. As a result, in the case where the partial range is not effectively irradiated by the light beam, the accuracy of the eye-tracking operation performed may be greatly reduced, which reduces the performance of the head mounted display.

US 2019/012540 A1 discloses an embedded eye tracker including a dichroic mirror, wherein light sources used for eye tracking are located in the frame of a spectacle frame. A funnel-shaped tube holding a lens, a display panel and a reflector inside such a tube together with light beam generators emitting light beams used for eye tracking is not disclosed. A division of eye tracking analysis into two different time intervals and decision-making based on detection and analysis of light beams during the first time interval is not disclosed by D1.

US 2015/035744 A1 and WO 2019/067731 A1 relate to general aspects of eye tracking and the problem if a distance between the eye and a near-eye optic of the head-mounted display system is determined to be is misaligned with a target optic location, and uses similar devices as US 2019/012540 A1.

US 8 971 570 B1 discloses a method for glint detection for enhanced eye tracking, and combines multiple images of the eye to incorporate multiple glint locations with the pupil location, to perform eye tracking with better accuracy and fewer light sources.

### SUMMARY

It is an object of the present invention to provide a head mounted display which is controlled for improved eye-tracking accuracy.

This problem is solved by a head mounted display as claimed by claim 1. Further advantageous embodiments are the subject-matter of the dependent claims.

Based on the above, the head mounted display of the invention can project the light beams to the surrounding area and the center area of the target area through the different light beam generators respectively disposed outside and inside the tube. When the target area is too close to the tube, the second light beam generator can project the second light beam to the center range of the target area to increase a brightness of a light spot generated at the center range of the target area, so to improve eye-tracking accuracy.

### BRIEF DESCRIPTION OF THE DRAWINGS

FIG. 1 illustrates a side view of a head mounted display in an embodiment of the invention.
FIG. 2 illustrates a schematic diagram of a head mounted display in an embodiment of the invention.
FIG. 3A to FIG. 3D illustrate schematic diagrams of a supplementary lighting operation in an embodiment of the invention.
FIG. 4 illustrates a flowchart of the supplementary lighting operation of the head mounted display in an embodiment of the invention.
FIG. 5 illustrates a schematic diagram of image information in an embodiment of the invention.
FIG. 6 illustrates a flowchart of an eye-tracking function of the head mounted display in an emb1odiment of the invention.
FIG. 7 illustrates a schematic diagram of a calculating method for a curvature of a cornea of an eyeball and a distance between the eyeball and a lens.

### DESCRIPTION OF THE EMBODIMENTS

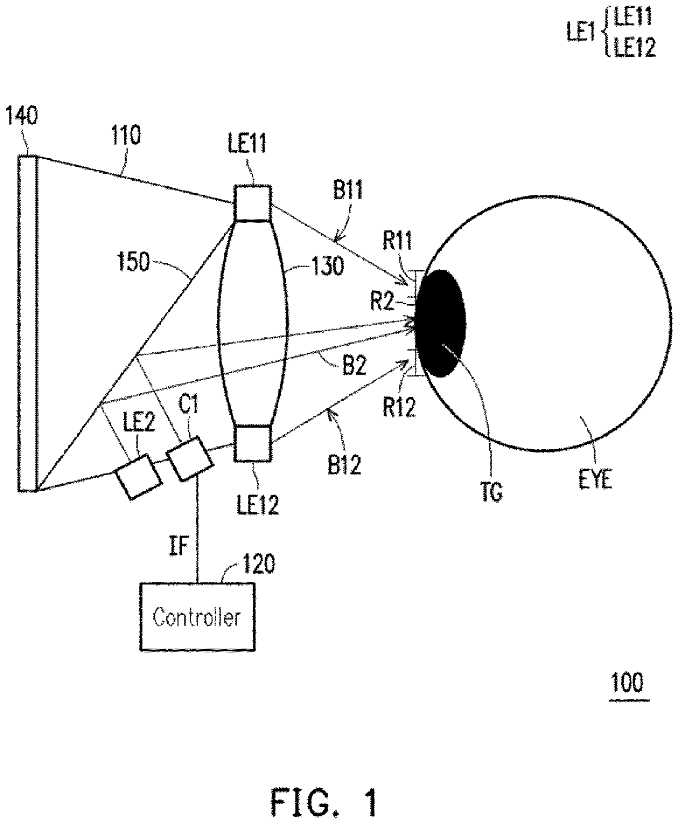

Referring to FIG. 1, FIG. 1 illustrates a side view of a head mounted display in an embodiment of the invention. A head mounted display 100 includes a tube 110, light beam generators LE1 and LE2, an image capturer C1, a controller 120, a lens 130 and a display panel 140. In this embodiment, the lens 130 is disposed on a first side of the tube 110 adjacent to a target area TG. The display panel 140 is disposed on a second side of the tube 110 away from the target area TG. The first side is opposite to the second side.

On the other hand, the light beam generator LE1 includes two partial light beam generators LE11 and LE12. Each of the partial light beam generators LE11 and LE12 of the light beam generator LE1 may include one or more light emitting diodes. In this embodiment, said light emitting diode may be an infrared emitting diode. The light beam generators LE11 and LE12 are respectively disposed on an upper edge and a lower edge of the lens 130 and respectively project light beams B11 and B12 to surrounding ranges R11 and R12 of the target area TG.

In addition, the light beam generator LE2 is disposed inside the tube 110 and configured to project a light beam B2. In this embodiment, a reflector 150 is disposed in the tube 110. Through the reflector 150, the light beam generator LE2 may have the light beam B2 reflected and then projected to a center range R2 of the target area TG. The light beam generator LE2 includes one or more light emitting diodes, which may be infrared emitting diode(s). The reflector 150 may be an infrared reflector.

The image capturer C1 may be an infrared camera. The image capturer C1 is disposed inside the tube 110, and captures image information of the target area TG through the reflector 150. The image capturer C1 is coupled to the controller 120, and configured to transmit image information IF to the controller 120. The controller 120 may then analyze the image information IF. When an eyeball EYE of a user is located on the target area TG, the controller 120 may perform a tracking operation on the eyeball EYE according to the image information IF.

In this embodiment, the controller 120 may be a processor with computing capability. Alternatively, the controller 120 may be a hardware circuit designed through Hardware Description Language (HDL) or any other design methods for digital circuit well-known to persons with ordinary skill in the art and may be implemented in from of Field Programmable Gate Array (FPGA), Complex Programmable Logic Device (CPLD) or Application-specific Integrated Circuit (ASIC).

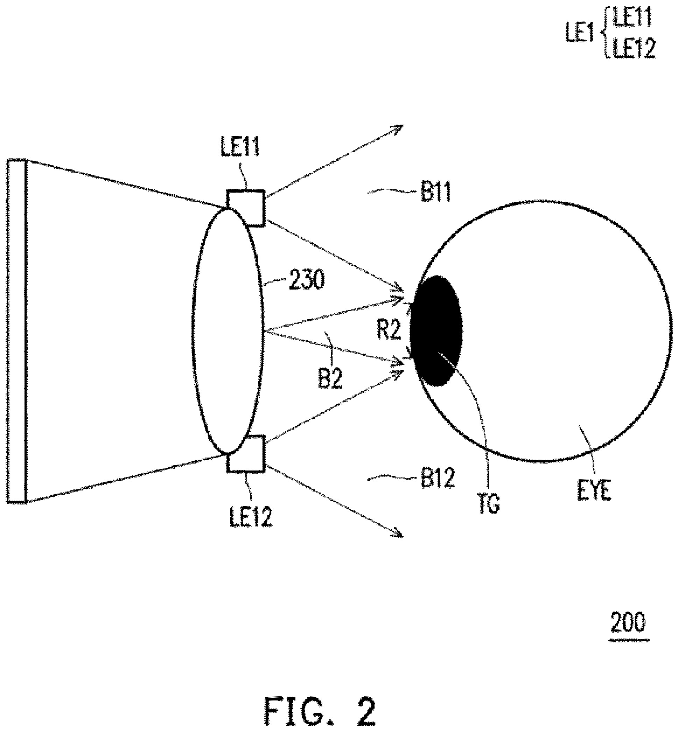

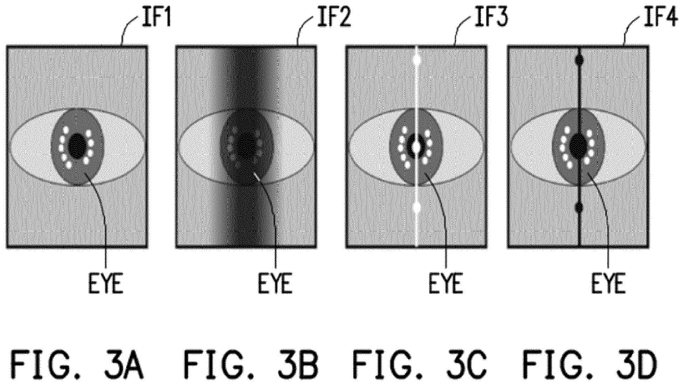

For operation details of the head mounted display in the embodiment of the invention, reference can be made to the schematic diagram of a head mounted display of the embodiment of the invention illustrated in FIG. 2 and the schematic diagrams of a supplementary lighting operation of the embodiment of the invention illustrated in FIG. 3A to FIG. 3D. In FIG. 2, an image capturer in a head mounted display 200 may perform an image capturing operation on the eyeball EYE on the target area, and in an ideal state, may obtain image information IF1 as shown in FIG. 3A.

When the eyeball EYE of the user is too close to a lens 230 of the head mounted display 200, a range covered by light beams projected by the beam generators LE11 and LE12 disposed at edges of the lens 230 cannot effectively cover the center range R2 of the target area on which the eyeball EYE is located. In this case, the image capturer in the head mounted display 200 may perform the image capturing operation on the eyeball EYE on the target area, and may obtain image information IF2 as shown in FIG. 3B. In the image information IF2, as can be clearly seen, it is difficult to recognize a light spot on the eyeball EYE of the user because the brightness is too low at a part of the eyeball EYE.

In this embodiment of the invention, the head mounted display 200 can turn on the light beam generator disposed inside the tube to project the light beam B2, and perform the supplementary lighting operation for the center range R2 of the target area through the light beam B2. After the light beam B2 is generated, the head mounted display 200 may capture image information IF3, wherein the brightness at the part of the eyeball EYE in the image information IF3 has been increased.

Incidentally, in the image information IF3, a stray light may be generated on the eyeball EYE due to the lens 230.

Next, in FIG. 3D, the controller of the head mounted display 200 may perform a stray light eliminating operation for the image information IF3, and accordingly obtain image information IF4. Further, the controller may determine a location of the eyeball EYE through a light spot on the eyeball in image information IF4.

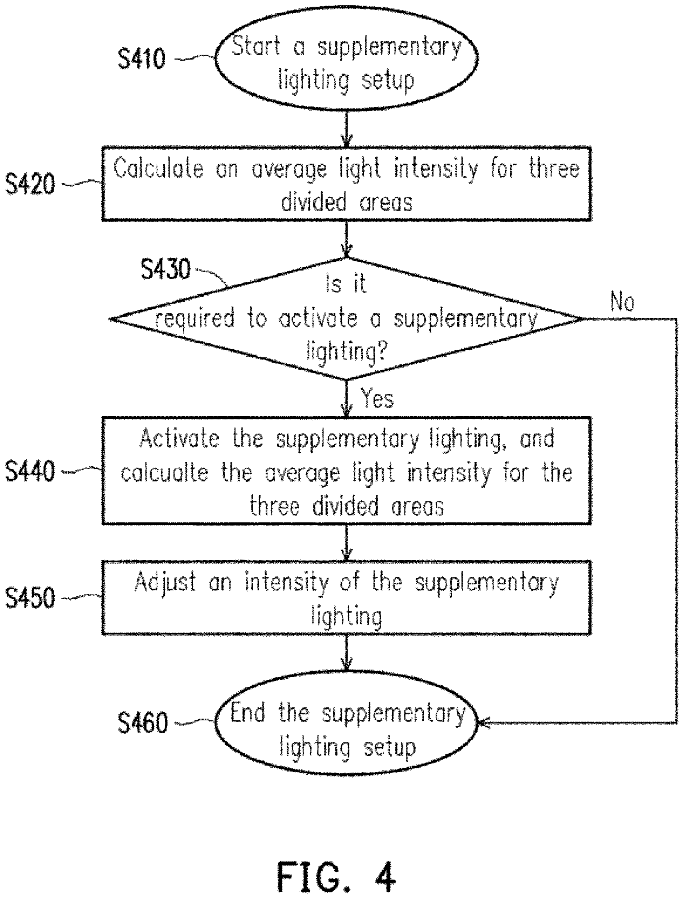

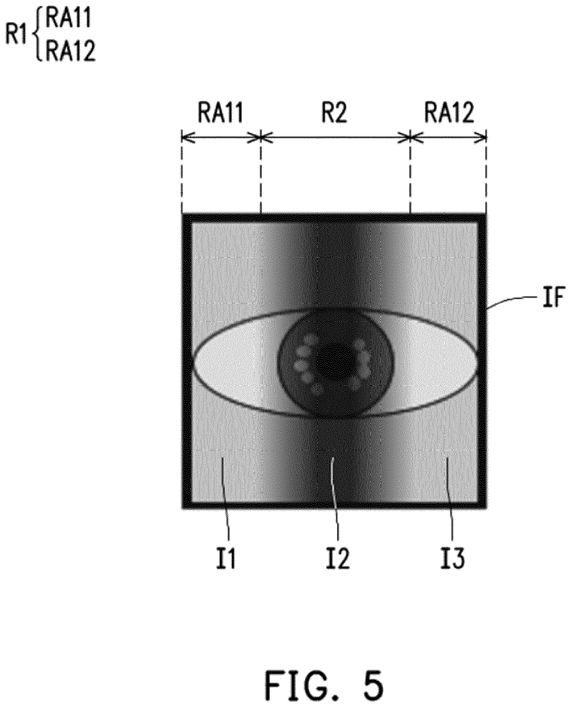

The following refers to FIG. 1 and FIG. 4 together, and FIG. 4 illustrates a flowchart of the supplementary lighting of the head mounted display in an embodiment of the invention. Here, in step S410, a supplementary lighting setup is started. At this time, in the head mounted display 100, the light beam generator LE2 disposed inside the tube 110 for projecting the light beam B2 to the center range R2 of the target area TG is not turned on. Instead, only the light beam generators LE11 and LE12 for projecting the light beams B11 and B12 to the surrounding ranges R11 and R12 of the target area TG are turned on. Next, in step S420, three areas are divided according to image information, and a light intensity in image information is calculated. Details of the above may refer to FIG. 1, FIG. 4 and FIG. 5 together, and FIG. 5 illustrates a schematic diagram of image information in an embodiment of the invention. In FIG. 5, according to the location of the image information IF, the controller 120 may divide the image information IF into the center range R2 and a surrounding range R1 including two sub ranges RA11 and RA12. Here, the center range R2 is between the sub ranges RA11 and RA12. In step S420, the controller 120 may calculate an average light intensity of the center range R2 to obtain an average brightness I2, and calculate average light intensities of the sub ranges RA11 and RA12 to obtain sub brightnesses I1 and 13. Further, the controller 120 may calculate a ratio of twice the average brightness I2 to a sum of the sub brightnesses I1 and I3 (=(2*I2)/(I1+I3)), and determine whether to activate the supplementary lighting operation according to whether the above ratio is less than a preset threshold (step S430).

In step S430, when the ratio is less than the preset threshold, the controller 120 may activate the supplementary lighting operation, turn on the light beam generator LE2 disposed inside the tube 110 to project the light beam B2 for a supplementary lighting to the center range R2 of the target area TG, and proceed to execute step S440. On the contrary, if the ratio is not less than the preset threshold, it is not required to start the supplementary lighting operation, and the supplementary lighting setup may be ended (step S460). The preset threshold of this embodiment may be 80%.

In step S440, the image capturer C1 may perform the image capturing operation on the target area TG again, and the controller 120 may then calculate the ratio of the average brightness of the center range R2 to the average brightnesses of the sub ranges RA11 and RA12 according to new image information. Next, in step S450, the controller 120 performs a brightness adjusting operation on the light beam for the supplementary lighting according to a size of the updated ratio (step S450). In an embodiment of the invention, when the updated ratio is less than 80%, it means that the brightness of the light beam for the supplementary light needs to be increased. On the other hand, when the updated ratio is greater than 120%, it means that the brightness of the light beam used for the supplementary light needs to be reduced. Corresponding to the above, the controller 120 may send a command to drive the light beam generator LE2 to adjust a light intensity (brightness) of the light beam B2.

In the operation of comparing the ratio with 80% and 120%, the values of 80% and 120% are only illustrative examples and are not intended to limit the scope of the invention. Those with ordinary knowledge in this field can set the comparison basis of the ratio according to the actual needs, and there are no specific restrictions.

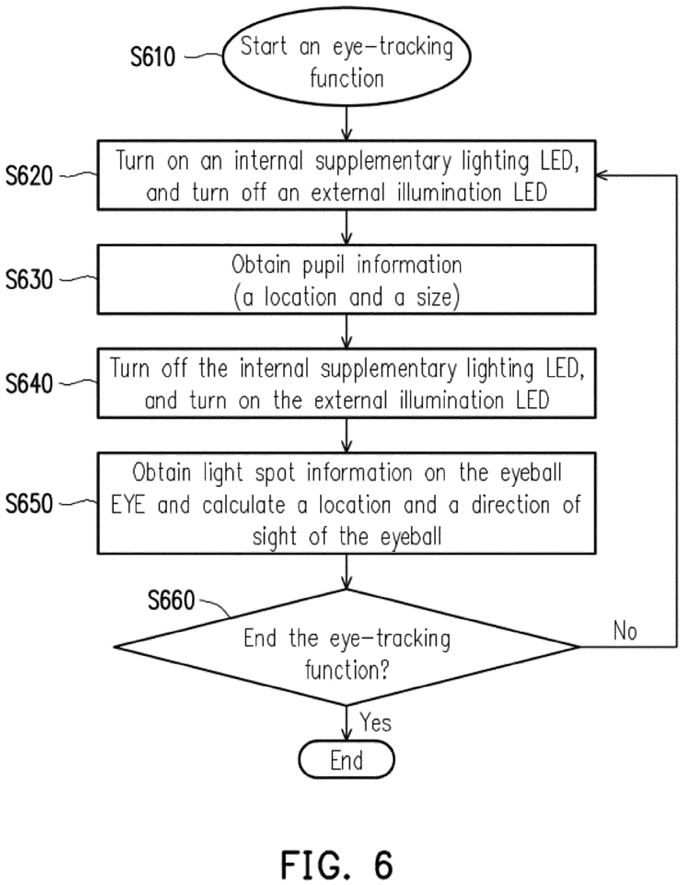

The following refers to FIG. 1 and FIG. 6 together, and FIG. 6 illustrates a flowchart of the eye-tracking function of the head mounted display in an embodiment of the invention. In step S610, an eye-tracking function is started. Next, in step S620, the head mounted display 100 may turn on the light beam generator (light emitting diode LED) LE2 disposed inside the tube 110 for the supplementary lighting operation, and turn off the light beam generators (light emitting diode LED) LE11 and LE12 disposed outside the tube 110 for illumination. Next, in step S630, the image capturer C1 captures image information of the eyeball EYE in the target area TG. The controller 120 may calculate pupil information (a location and a size of the pupil) according to the image information of the center range that is lit.

Next, in step S640, the head mounted display 100 may turn off the light beam generator (light emitting diode LED) LE2 disposed inside the tube 110, and turn on the light beam generators (light emitting diode LED) LE11 and LE12 disposed outside the tube 110. In step S650, by capturing the image information of the eyeball EYE, light spot information on the eyeball EYE is obtained and a location and a direction of sight of the eyeball are calculated.

In step S660, whether to end the eye-tracking operation is determined. If the eye-tracking operation is not to be ended, step S620 is executed again. The determination of step S660 may be based on whether an eye-tracking requirement of the head mounted display 100 is ended, and the entire process may be ended when the head mounted display 100 no longer needs to track the location of the eyeball of the user.

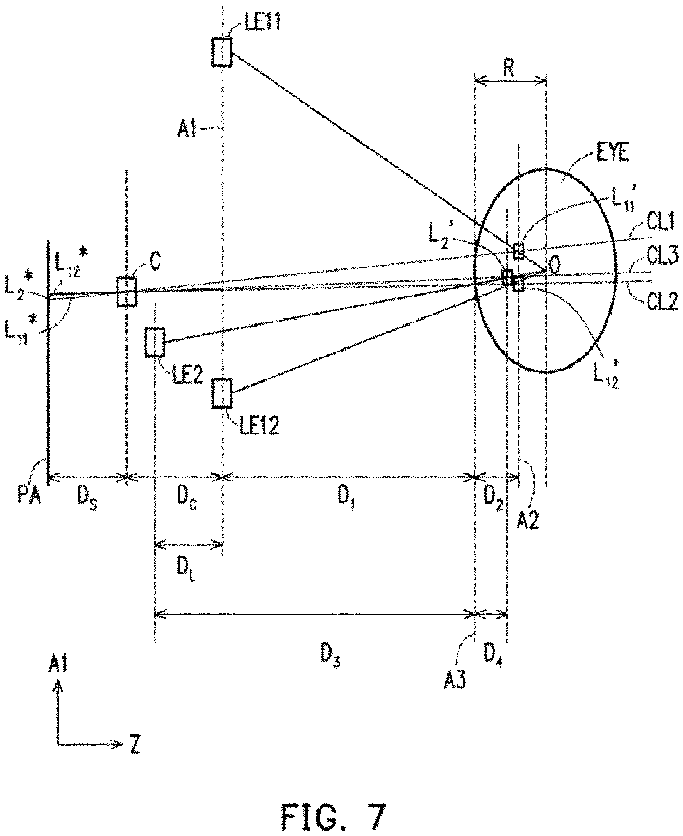

More specifically, the head mounted display of the invention may further calculate the curvature of the cornea of the eyeball of the user and a distance between the eyeball and the lens according to the captured image information. Referring to FIG. 7, FIG. 7 illustrates a schematic diagram of a calculating method for the curvature of the cornea of the eyeball and the distance between the eyeball and the lens. In FIG. 7, in the image capturer, a distance D_{S} is provided between a light center C of the image capturer and a screen PA; a shortest distance D_{C} is provided between a connecting line A1 of the light beam generators LE11 and LE12 disposed outside the tube and the light center C; and a shortest distance D_{L} is provided between the light beam generator LE2 disposed inside the tube and the connecting line A1. Here, because the light beam generator LE2 is not coplanar with the light beam generators LE11 and LE12, the distance D_{L} is not equal to 0. The image information may be generated on the screen PA, and the image information includes light spot images L₁₁*, L₁₂* and L₂*. The light spot images L₁₁* ,L₁₂* and L₂* respectively correspond to light spots generated on the eyeball EYE by the light beams provided by the light beam generators LE11 and LE12 and the light beam generator LE2. The aforementioned distances D_{S}, D_{S} and D_{L} are all known and fixed parameters.

On the other hand, the cornea of the eyeball EYE is spherical and has a radius of curvature R and a spherical center O. A shortest distance D₁ is provided between the eyeball EYE and the connecting line A1 of the light beam generators LE11 and LE12 (which is equal to a distance between a spherical tangent A3 of the eyeball EYE and the connecting line A1). Further, the light beams provided by the light beam generators LE11, LE12 and LE2 may be imaged on different locations L₁₁', L₁₂' and L₂' in the eyeball EYE. Here, the locations L₁₁' and L₁₂' are not coplanar with the location L₂'. In addition, a shortest distance D₂ is provided between a connecting line A2 of the locations L₁₁' and L₁₂' and the tangent A3; a shortest distance D₄ is provided between the location L₂' and the tangent A3; and a shortest distance D₃ is provided between the tangent A3 and the light beam generator LE2. The above distances D₁ to D₄ are all variable parameters.

In this embodiment of the invention, the radius of curvature R of the cornea and the distance D₁ may be calculated through an imaging formula. First, a hypothetical plane is set, and the hypothetical plane is parallel to the connecting line A1 and perpendicular to a Z axis. Next, the connecting line A2 is positioned on FIG. 7. A first connecting line CL1 is generated according to the light center C and the light spot image L₁₁*, and a second connecting line CL2 is generated according to the light center C and the light spot image. Accordingly, an intersection (the location L₁₁') between the first connecting line CL1 and the connecting line A2 and an intersection (the location L₁₂') between the second connecting line CL2 and the connecting line A2 are calculated. The spherical center O is an intersection between a connecting line of the location LE11 and the location L₁₁' and a connecting line of the location LE12 and the location L₁₂'.

A shortest distance between the spherical center O and the connecting line A2 may be equal to the radius of curvature R minus the distance D₂. A shortest distance between the connecting lines A1 and A2 is equal to the distance D₁+the distance D₂. According to the imaging formula, a mathematical formula may be obtained as: 1/D₁+1/D₂=2/R. By solving the simultaneous equations for the above relationship, the distances D₁ and D₂ and the radius of curvature R may be calculated.

Then, a third connection CL3 is generated according to the light center C and the light spot image L₂* and an intersection between a connecting line of the spherical center O and the light beam generator LE2 and the connecting line CL3 is calculated to obtain the location L₂'. Here, the distance D₃=the distance D_{L}+the distance D₁, and the distance D₄ may be obtained according to the imaging formula: 1/D₃+1/D₄=2/R.

Because the connecting line A2 based on the above is hypothetical at the beginning of the calculation and is not necessarily set at the correct position, a further verification need to be performed. Here, a vector is generated according to the location L₂'and the spherical center O, and an inner product operation is performed on this vector and the Z axis. The result of the operation is subtracted (the radius of curvature R-the distance D₄) to generate an error value. When the error value is not equal to 0 or greater than a tolerance value, the location of the connecting line A2 may be adjusted and the aforesaid operation may be performed to obtain the new distances D₁ to D₄ and the radius of curvature R until the error value is equal to 0 or less than the tolerance value.

In this way, the head mounted display of this embodiment of the invention can effectively calculate the curvature of the cornea of the eyeball and the distance between the eyeball and the lens, thereby improving the efficiency of eye-tracking.

The above calculation of the curvature of the cornea of the eyeball and the distance between the eyeball and the lens using the imaging formula are only examples for illustration, and do not limit the scope of the present invention. The head mounted display of this embodiment of the invention may also use other calculation methods to obtain the curvature of the cornea of the eyeball and the distance between the eyeball and the lens.

In summary, according to the invention, different light beam generators are provided inside and outside a case of the head mounted display, and the light beam generators project the light beams to the surrounding range and the center range of the target area during the eye-tracking operation, respectively. As a result, all ranges in the target area can have sufficiently high brightness so that the eye-tracking operation may be effectively performed.

## Claims

1. A head mounted display (100), configured to be worn by a user, comprising:
a tube (110), a lens (130), a display panel (140) and a reflector (150), wherein the lens (130) is disposed on a first side of the tube (110) adjacent to a target area (TG) and the display panel (140) is disposed on a second side of the tube (110) away from the target area (TG), said second side being opposite to the first side;
a first light beam generator (LE1), which includes one or more infrared emitting diodes and is disposed outside the tube, configured to project a plurality of first light beams (B11) to a first range (R11) of the target area (TG);
a second light beam generator (LE2), which includes one or more infrared emitting diodes and is disposed inside the tube, configured to project a second light beam (B12) to a second range (R12) of the target area (TG);
an image capturer (C1), configured to capture an image on the target area (TG) to generate image information (IF); and
a controller (120), configured to receive the image information from the image capturer (C1) and performing an eye-tracking operation according to the generated image information (IF) when an eyeball (EYE) of the user is located on the target area (TG),
wherein
the first light beam generator (LE1) is disposed on an edge of the lens (130), and
the reflector (150) is disposed in the tube (110) to reflect the second light beam (B12) emitted by the second light beam generator (LE2) to the target area (TG) and to reflect reflections of the second light beam (B12) on the target area (TG) towards the image capturer (C1) so that the image capturer (C1) captures the image information of the target area (TG) through the reflector (150), wherein
the second light beam generator (LE2) and the reflector (150) are disposed in such a manner that the second range (R12) is a center range of the target area (TG), and
the first light beam generator (LE1) is disposed in such a manner that the first range (R11) is a surrounding range of the target area (TG), wherein in a first time interval:
the first light beam generator (LE1) projects the first light beams (B11) to the first range (R12) of the target area (TG),
the image capturer (C1) captures the image of the first light beams (B11) on the target area (TG) to generate first image information, and
the controller (120) respectively calculates a first average brightness and a second average brightness of the first range (R12) and the second range (R2) according to the first image information, wherein
when the controller (120) determines that a ratio of the second average brightness to the first average brightness is less than a preset threshold,
the controller (120) drives the second light beam generator (LE2) to project the second light beam (B 12) towards the target area (TG) in a second time interval subsequent to the first time interval,
the image capturer (C1) captures the image of the second light beam (B12) on the target area (TG) to generate second image information, and
the controller (120) calculates location information of the eyeball (EYE) on the target area (TG) according to the second image information.

2. The head mounted display according to claim 1, wherein
when the controller (120) determines that the ratio of the second average brightness to the first average brightness is less than the preset threshold and the controller (120) turns on second light beam generator (LE2) in the second time interval, the second light beam generator (LE2) is operated with increased brightness of the second light beam (LE2).

3. The head mounted display according to claim 1, comprising two first light beam generators (LE11, LE12) disposed in such a manner, that, in the first time interval, the first light beam generators projects (LE11, LE12) first light beams (B11, B12) to a first sub range (R12) and a second sub range (R11) of the first range that are reflected from the target area (TG) to the first image capturer (C1) via the reflector (150), so that the controller (120) obtains a first sub brightness I1 and a second sub brightness I3 respectively corresponding to the first sub range (R12) and the second sub range (R12) and calculates a ratio I3 of twice the second average brightness I2 to a sum of the first sub brightness I1 and the second sub brightness I3 = (2*I2)/(I1+I3).

4. The head mounted display according to claim 3, wherein the brightness of the second light beam is increased when the ratio I3 is less than 80%.

5. The head mounted display according to claim 3, wherein when the ratio I3 is greater than 120%, the controller (120) operates the second light beam generator (LE2) to reduce the brightness of the second light beam (B12) .

6. The head mounted display according to any of the preceding claims, wherein in a first time interval:
the second light beam generator projects the second light beam to the second range of the target area;
the first light beam generator is turned off;
the image capturer captures the image on the target area to generate first image information; and
the controller calculates pupil information of the eyeball (EYE) in the target area according to the first image information; and
in a second time interval different from the first time interval:
the first light beam generator projects the first light beams to the first range of the target area; the second light beam generator is turned off;
the image capturer captures the image on the target area to generate second image information; and
the controller calculates a location and a direction of sight of the eyeball in the target area (TG) according to the first image information.

7. The head mounted display according to any of the preceding claims, further comprising:
a lens (130), disposed on a first side of the tube (110) adjacent to the target area (TG);
wherein the first light beam generator (LE1) is disposed on an edge of the lens (130).

8. The head mounted display according to claim 7, wherein the controller (120) further calculates a curvature of a cornea of the eyeball (EYE) and a distance between the eyeball (EYE) and the lens (130) according to the image information.

9. The head mounted display according to any of the preceding claims, wherein
the first light beam generator (LE1) comprises a plurality of first infrared transmitters;
the second light beam generator (LE2) comprises a plurality of second infrared transmitters; and
the image capturer (C1) is an infrared camera.

## Patentansprüche

1. Am Kopf montierte Anzeigevorrichtung (100), die so konfiguriert ist, dass sie von einem Benutzer getragen werden kann, umfassend:
einen Tubus (110), eine Optik (130), eine Anzeigetafel (140) und einen Reflektor (150), wobei die Optik (130) auf einer ersten Seite des Tubus (110) angrenzend an einen Zielbereich (TG) angeordnet ist und die Anzeigefläche (140) auf einer zweiten Seite des Tubus (110) dem Zielbereich (TG) abgewandt angeordnet ist, wobei die zweite Seite der ersten Seite gegenüber liegt;
einen ersten Lichtstrahlerzeuger (LE1), der eine oder mehrere infrarotes Licht abstrahlende Dioden umfasst und außerhalb des Tubus angeordnet ist und so konfiguriert ist, dass er eine Vielzahl von ersten Lichtstrahlen (B11) auf einen ersten Bereich (R11) des Zielbereichs (TG) projiziert;
einen zweiten Lichtstrahlerzeuger (LE2), der eine oder mehrere infrarotes Licht abstrahlende Dioden umfasst und innerhalb des Tubus angeordnet ist und so konfiguriert ist, dass er einen zweiten Lichtstrahl (B12) auf einen zweiten Bereich (R12) des Zielbereichs (TG) projiziert;
eine Bilderfassungseinrichtung (C1), die so konfiguriert ist, dass sie ein Bild auf dem Zielbereich (TG) erfasst, um Bildinformation (IF) zu erzeugen; und
eine Steuereinrichtung (120), die so konfiguriert ist, dass sie die Bildinformation von der Bilderfassungseinrichtung (C1) empfängt und eine Blickverfolgungsoperation entsprechend der erzeugten Bildinformation (IF) durchführt, wenn sich ein Augapfel (EYE) des Benutzers auf dem Zielbereich (TG) befindet,
wobei
der erste Lichtstrahlerzeuger (LE1) an einem Rand der Optik (130) angeordnet ist, und
der Reflektor (150) in dem Tubus (110) angeordnet ist, um den zweiten Lichtstrahl (B12), der von dem zweiten Lichtstrahlerzeuger (LE2) abgestrahlt wird, zu dem Zielbereich (TG) zu reflektieren und um Reflexionen des zweiten Lichtstrahls (B12) auf dem Zielbereich (TG) in Richtung der Bilderfassungseinrichtung (C1) zu reflektieren, so dass die Bilderfassungseinrichtung (C1) die Bildinformation des Zielbereichs (TG) mit Hilfe des Reflektors (150) erfasst, wobei
der zweite Lichtstrahlerzeuger (LE2) und der Reflektor (150) so angeordnet sind, dass der zweite Bereich (R12) ein mittlerer Bereich des Zielbereichs (TG) ist, und
der erste Lichtstrahlerzeuger (LE1) so angeordnet ist, dass der erste Bereich (R11) ein Umgebungsbereich des Zielbereichs (TG) ist, wobei in einem ersten Zeitintervall
der erste Lichtstrahlerzeuger (LE1) die ersten Lichtstrahlen (B11) auf den ersten Bereich (R12) des Zielgebiets (TG) projiziert,
die Bilderfassungseinrichtung (C1) das Bild der ersten Lichtstrahlen (B11) auf der Zielfläche (TG) erfasst, um eine erste Bildinformation zu erzeugen, und
die Steuereinheit (120) jeweils eine erste durchschnittliche Helligkeit und eine zweite durchschnittliche Helligkeit des ersten Bereichs (R12) und des zweiten Bereichs (R2) entsprechend der ersten Bildinformation berechnet, wobei
wenn die Steuereinheit (120) feststellt, dass ein Verhältnis der zweiten durchschnittlichen Helligkeit zu der ersten durchschnittlichen Helligkeit kleiner als ein voreingestellter Schwellenwert ist,
die Steuereinheit (120) den zweiten Lichtstrahlerzeuger (LE2) ansteuert, um den zweiten Lichtstrahl (B12) in einem zweiten Zeitintervall nach dem ersten Zeitintervall auf den Zielbereich (TG) zu projizieren,
die Bilderfassungseinrichtung (C1) das Bild des zweiten Lichtstrahls (B12) auf dem Zielbereich (TG) aufnimmt, um eine zweite Bildinformation zu erzeugen, und
die Steuereinheit (120) die Ortsinformationen des Augapfels (EYE) auf dem Zielbereich (TG) entsprechend der zweiten Bildinformation berechnet.

2. Am Kopf montierte Anzeigevorrichtung nach Anspruch 1, wobei
wenn die Steuereinheit (120) feststellt, dass das Verhältnis der zweiten durchschnittlichen Helligkeit zu der ersten durchschnittlichen Helligkeit kleiner als der voreingestellte Schwellenwert ist, und die Steuereinheit (120) den zweiten Lichtstrahlerzeuger (LE2) im zweiten Zeitintervall einschaltet, der zweite Lichtstrahlerzeuger (LE2) mit eine höheren Helligkeit für den zweiten Lichtstrahl (LE2) betrieben wird.

3. Am Kopf montierte Anzeigevorrichtung nach Anspruch 1, mit zwei ersten Lichtstrahlerzeugern (LE11, LE12), die so angeordnet sind, dass die ersten Lichtstrahlerzeuger (LE11, LE12) im ersten Zeitintervall erste Lichtstrahlen (B11, B12) auf einen ersten Teilbereich (R12) und einen zweiten Teilbereich (R11) des ersten Bereichs projizieren, die von dem Zielbereich (TG) über den Reflektor (150) zu der ersten Bilderfassungseinrichtung (C1) reflektiert werden, so dass die Steuereinheit (120) eine erste Teilhelligkeit I1 und eine zweite Teilhelligkeit I3 erhält, die jeweils dem ersten Teilbereich (R12) und dem zweiten Teilbereich (R12) entsprechen, und ein Verhältnis I3 der doppelten zweiten Durchschnittshelligkeit I2 zu einer Summe der ersten Teilhelligkeit I1 und der zweiten Teilhelligkeit I3 = (2*I2)/(I1+I3) berechnet.

4. Am Kopf montierte Anzeigevorrichtung nach Anspruch 3, wobei die Helligkeit des zweiten Lichtstrahls erhöht wird, wenn das Verhältnis I3 weniger als 80% beträgt.

5. Am Kopf montierte Anzeigevorrichtung nach Anspruch 3, wobei die Steuereinheit (120) den zweiten Lichtstrahlerzeuger (LE2) ansteuert, um die Helligkeit des zweiten Lichtstrahls (B12) zu verringern, wenn das Verhältnis I3 größer als 120% ist.

6. Am Kopf montierte Anzeigevorrichtung nach einem der vorhergehenden Ansprüche, wobei in einem ersten Zeitintervall:
der zweite Lichtstrahlerzeuger den zweiten Lichtstrahl auf den zweiten Bereich des Zielbereichs projiziert;
der erste Lichtstrahlerzeuger ausgeschaltet wird;
die Bilderfassungseinrichtung das Bild auf dem Zielbereich erfasst, um eine erste Bildinformation zu erzeugen; und
die Steuereinheit eine Pupilleninformation des Augapfels (EYE) im Zielbereich entsprechend der ersten Bildinformation berechnet; und
in einem zweiten Zeitintervall, das sich von dem ersten Zeitintervall unterscheidet:
der erste Lichtstrahlerzeuger die ersten Lichtstrahlen auf den ersten Bereich des Zielbereichs projiziert;
der zweite Lichtstrahlerzeuger ausgeschaltet wird;
die Bilderfassungseinrichtung das Bild auf dem Zielbereich erfasst, um eine zweite Bildinformation zu erzeugen; und
die Steuereinheit einen Ort und eine Blickrichtung des Augapfels im Zielbereich (TG) entsprechend der ersten Bildinformationen berechnet.

7. Am Kopf montierte Anzeigevorrichtung nach einem der vorhergehenden Ansprüche, die ferner umfasst:
eine Optik (130), die auf einer ersten Seite des Tubus (110) angrenzend an den Zielbereich (TG) angeordnet ist;
wobei der erste Lichtstrahlerzeuger (LE1) an einem Rand der Optik (130) angeordnet ist.

8. Am Kopf montierte Anzeigevorrichtung nach Anspruch 7, wobei die Steuereinheit (120) ferner eine Krümmung einer Hornhaut des Augapfels (EYE) und einen Abstand zwischen dem Augapfel (EYE) und der Optik (130) entsprechend der Bildinformation berechnet.

9. Am Kopf montierte Anzeigevorrichtung nach einem der vorhergehenden Ansprüche, wobei
der erste Lichtstrahlerzeuger (LE1) eine Vielzahl von ersten Infrarotsendern umfasst;
der zweite Lichtstrahlerzeuger (LE2) eine Vielzahl von zweiten Infrarotsendern umfasst; und
die Bilderfassungseinrichtung (C1) eine Infrarotkamera ist.

## Revendications

1. Un affichage monté sur une tête (100), configuré pour être porté par un utilisateur, comprenant :
un tube (110), une lentille (130), un panneau d'affichage (140) et un réflecteur (150), dans lequel la lentille (130) est disposée sur un premier côté du tube (110) adjacent à une zone cible (TG) et le panneau d'affichage (140) est disposé sur un deuxième côté du tube (110) éloigné de la zone cible (TG), ledit deuxième côté étant opposé au premier côté ;
un premier générateur de faisceau lumineux (LE1), qui comprend une ou plusieurs diodes émettrices d'infrarouges et est disposé à l'extérieur du tube, configuré pour projeter une pluralité de premiers faisceaux lumineux (B11) sur une première plage (R11) de la zone cible (TG) ;
un deuxième générateur de faisceau lumineux (LE2), qui comprend une ou plusieurs diodes émettrices d'infrarouges et qui est placé à l'intérieur du tube, configuré pour projeter un deuxième faisceau lumineux (B12) sur une deuxième plage (R12) de la zone cible (TG) ;
un capteur d'images (C1), configuré pour capturer une image sur la zone cible (TG) afin de générer des informations d'image (IF) ; et
un contrôleur (120), configuré pour recevoir les informations d'image du capteur d'image (C1) et effectuer une opération de suivi oculaire en fonction des informations d'image générées (IF) lorsqu'un globe oculaire (EYE) de l'utilisateur est situé sur la zone cible (TG),
dans lequel
le premier générateur de faisceau lumineux (LE1) est disposé sur un bord de la lentille (130), et
le réflecteur (150) est disposé dans le tube (110) pour réfléchir le second faisceau lumineux (B12) émis par le second générateur de faisceau lumineux (LE2) vers la zone cible (TG) et pour réfléchir les réflexions du second faisceau lumineux (B12) sur la zone cible (TG) vers le capteur d'image (C1) de sorte que le capteur d'image (C1) capture les informations d'image de la zone cible (TG) à travers le réflecteur (150), dans lequel
le second générateur de faisceau lumineux (LE2) et le réflecteur (150) sont disposés de manière à ce que la seconde plage (R12) soit une plage centrale de la zone cible (TG), et
le premier générateur de faisceau lumineux (LE1) est disposé de manière à ce que la première plage (R11) soit une plage environnante de la zone cible (TG), dans lequel, dans un premier intervalle de temps :
le premier générateur de faisceaux lumineux (LE1) projette les premiers faisceaux lumineux (B11) vers la première plage (R12) de la zone cible (TG),
le capteur d'images (C1) capture l'image des premiers faisceaux lumineux (B11) sur la zone cible (TG) pour générer les premières informations d'image, et
le contrôleur (120) calcule respectivement une première luminosité moyenne et une seconde luminosité moyenne de la première plage (R12) et de la seconde plage (R2) en fonction des premières informations d'image, dans lesquelles
lorsque le contrôleur (120) détermine qu'un rapport entre la seconde luminosité moyenne et la première luminosité moyenne est inférieur à un seuil prédéfini,
le contrôleur (120) commande le deuxième générateur de faisceau lumineux (LE2) pour projeter le deuxième faisceau lumineux (B12) vers la zone cible (TG) dans un deuxième intervalle de temps suivant le premier intervalle de temps,
le capteur d'images (C1) capture l'image du second faisceau lumineux (B12) sur la zone cible (TG) pour générer une seconde information d'image, et
le contrôleur (120) calcule les informations de localisation du globe oculaire (EYE) sur la zone cible (TG) en fonction des secondes informations d'image.

2. L'affichage monté sur une tête selon la revendication 1, dans lequel
lorsque le contrôleur (120) détermine que le rapport entre la seconde luminosité moyenne et la première luminosité moyenne est inférieur au seuil prédéfini et que le contrôleur (120) allume le second générateur de faisceau lumineux (LE2) dans le second intervalle de temps, le second générateur de faisceau lumineux (LE2) fonctionne avec une luminosité accrue du second faisceau lumineux (LE2).

3. L'affichage monté sur une tête selon la revendication 1, comprenant deux premiers générateurs de faisceaux lumineux (LE11, LE12) disposés de telle manière que, dans le premier intervalle de temps, les premiers générateurs de faisceaux lumineux projettent (LE11, LE12) des premiers faisceaux lumineux (B11, B12) vers une première sous-plage (R12) et une deuxième sous-plage (R11) de la première plage qui sont réfléchis depuis la zone cible (TG) vers le premier capteur d'images (C1) via le réflecteur (150), de sorte que le contrôleur (120) obtienne une première sous-luminosité I1 et une deuxième sous-luminosité I3 correspondant respectivement à la première sous-gamme (R12) et à la deuxième sous-gamme (R12) et calcule un rapport I3 de deux fois la deuxième luminosité moyenne I2 sur une somme de la première sous-luminosité I1 et de la deuxième sous-luminosité I3 = (2*I2)/(I1+I3).

4. L'affichage monté sur une tête selon la revendication 3, dans lequel la luminosité du second faisceau lumineux est augmentée lorsque le rapport I3 est inférieur à 80 %.

5. L'affichage monté sur une tête selon la revendication 3, dans lequel lorsque le rapport I3 est supérieur à 120%, le contrôleur (120) fait fonctionner le deuxième générateur de faisceau lumineux (LE2) pour réduire la luminosité du deuxième faisceau lumineux (B12) .

6. L'affichage monté sur une tête selon l'une quelconque des revendications précédentes, dans lequel, dans un premier intervalle de temps :
le deuxième générateur de faisceau lumineux projette le deuxième faisceau lumineux sur la deuxième plage de la zone cible ;
le premier générateur de faisceau lumineux est éteint
le capteur d'images capture l'image sur la zone cible pour générer les premières informations d'image ; et
le contrôleur calcule les informations sur la pupille du globe oculaire (EYE) dans la zone cible en fonction des premières informations d'image ; et
dans un deuxième intervalle de temps différent du premier intervalle de temps :
le premier générateur de faisceaux lumineux projette les premiers faisceaux lumineux sur la première plage de la zone cible ; le second générateur de faisceaux lumineux est éteint ;
le capteur d'images capture l'image sur la zone cible pour générer une deuxième information d'image ; et
le contrôleur calcule l'emplacement et la direction de visée du globe oculaire dans la zone cible (TG) en fonction des premières informations d'image.

7. L'affichage monté sur une tête selon l'une quelconque des revendications précédentes, comprenant en outre :
une lentille (130), disposée sur un premier côté du tube (110) adjacent à la zone cible (TG) ;
dans lequel le premier générateur de faisceau lumineux (LE1) est disposé sur un bord de la lentille (130).

8. L'affichage monté sur une tête selon la revendication 7, dans lequel le contrôleur (120) calcule en outre une courbure d'une cornée du globe oculaire (EYE) et une distance entre le globe oculaire (EYE) et la lentille (130) en fonction des informations d'image.

9. L'affichage monté sur une tête selon l'une quelconque des revendications précédentes, dans lequel
le premier générateur de faisceau lumineux (LE1) comprend une pluralité de premiers émetteurs infrarouges ;
le second générateur de faisceau lumineux (LE2) comprend une pluralité de seconds émetteurs infrarouges ; et
le capteur d'images (C1) est une caméra infrarouge.
